# EUROPEAN PATENT SPECIFICATION

(11) **EP 2 291 770 B1**
(45) Date of publication and mention of the grant of the patent: **07.03.2012**
(21) Application number: 08776239.9
(22) Date of filing: 09.07.2008
(51) Int. Cl.: G06F 17/30

(54) **SYSTEM FOR RECEIVING HIERARCHICALLY ORDERED CONTENT VIA SMS OR MMS MESSAGES**
SYSTEM ZUM EMPFANGEN VON HIERARCHISCH GEORDNETEM INHALT ÜBER SMS- ODER MMS-NACHRICHTEN
SYSTÈME DE RÉCEPTION, VIA DES MESSAGES SMS OU MMS, DE CONTENU HIÉRARCHIQUEMENT CLASSÉ

(30) Priority: 19.06.2008 HR 20080278
(43) Date of publication of application: 09.03.2011
(73) Proprietor: Dragicevic, Marko, 20000 Dubrovnik (HR)
(72) Inventor: HALAMBEK, Davor, HR-10000 Zagreb (HR)
(74) Representative: Bihar, Zeljko
(86) International application number: PCT/HR2008/000025
(87) International publication number: WO 2009/153608

(56) References cited:
- EP-A- 1 333 646
- DE-A1- 19 855 230
- GB-A- 2 443 861
- GB-A- 2 444 361

## Description

### DESCRIPTION OF THE INVENTION

### Technical field

The present invention is directed to the system and method that enables viewing of the hierarchically ordered server content in the form of folders or any equivalent hierarchically ordered data structure that is stored on the disk (or similar device for data storage) and where the said server is reachable via standard SMS/MMS communication channel.

### Technical problem

The first technical problem that is solved with the present invention is the way of "listing" and "retrieving" of the folder content, or of the equivalent hierarchically ordered data structure on the same computer, where the said computer is connected to the communication network, preferably Internet, and equipped with at least one SMS-gateway (that usually belongs to a GSM operator).

The second technical problem that is solved with the present invention is using of the mentioned system for retrieving the structured advertising content, stored within the mentioned hierarchical structure (or within the folders), via feed-back SMS/MMS messages.

### State of the art

Considering the constant increase of the GSM user number and the high penetration of the GSM operators around the world, GSM operators have developed many SMS/MMS services in order to increase the "traffic" and compete with a competition.

The usually offered SMS service is one-way SMS service; i.e. for checking a GSM bill within the mobile operator, for participation in the various types of games by sending the product code, for SMS betting, and for many other similar and already seen simple applications.

European patent application EP 1333646 (Koninklijke KPN N.V.) published on August 06, 2003 teaches about the possibility to retrieve server content via mobile terminal or mobile phone. A said server is offering an internet portal comprising a main menu and sub-menus. The present patent application differs from the cited document in handling the "on-line" status of a mobile phone and the way of retrieving stored information.

Document published on May 21, 2008 as the GB 2443861 A (Worldwide Electronic Consultants Limited), teaches about the information storage and distribution via text message; wherein a database having stored plurality of Keywords and plurality of Reply Messages associated with at least one of the Keywords. The described system compares the incoming text message with stored Keywords and upon a successful comparison retrieves the associated Reply Message and forwards it to the sender. The present patent application differs from the cited document in handling the "on-line" status of a mobile phone and the nature of the data stored in database; i.e. it is not possible to browse among the pre-stored data in the system described in cited document of previous art.

Document US 7,072,676 B1 (Robert Bosch GmbH) based on priority document DE19855230 teaches about the method and a wireless transreceiver for requesting and processing information. According to the cited invention, a first information query is transmitted by the wireless transreceiver and information is returned by a service provider. The information query is provided with a predefined first validity time value and the returned information in form of a SMS is provided with a predefined second validity time value by the service provider. The system is directed to estimate validity of received information by the first transreceiver (mobile device), where first transreceiver exclusively processes message time information. In the present invention "elapsed time" is used for position determination within the hierarchical data structure, i.e. elapsed time is used for defining "on-line" status or beginning of new session. It is to be mentioned that none of the prior art documents teaches the feature of "elapsed time".

### Summary of the invention

The described invention enables viewing of the hierarchically ordered server content (or computer folders content) stored on the computer disk (or similar storage device) of the distant server via standard SMS/MMS messages. The distant server has to store the following minimum amount of data: the GSM number of the user, relative position in the above said folder structure or hierarchical structure for the each user, and the time of last interaction with the server for each particular user. With each subsequent SMS sent within the predetermined time interval, the GSM user may go "up" or "down" for one level within the said hierarchical structure. Once reaching the lowest hierarchical level (that may contain textual, pictorial, or some other content) this content can be retrieved by the GSM user via the SMS or MMS communication channel. The mention invention is suitable for the searching the data regarding the product, wherein the product are classified within the folders.

### Detailed description of the invention

With the recent development of the advertising practice it is common to expect from a GSM operators to exploit its own infrastructure for the advertising business and increase use of the infrastructure. Especially convenient tools are SMS and MMS channels. The current practice was to include the customers into a SMS distribution lists by which the customer was always in the passive position. Namely, the distributed information via SMS list usually reached the user in the wrong time, and therefore is being ignored from the mayor part of the targeted users like an ordinary SPAM message.

The present invention puts the user of an SMS/MMS service in the position to require and retrieve the accurate and quick hierarchically ordered information on demand.

The system functionality can be easily understood via example of retrieving the structured information of one imaginary retail chain.

We can imagine the products information and corresponding prices of one retail chain (in this example named XCHAIN) that can be stored in hierarchically ordered manner:

| **Level** | **Key Word** | **Hierarchically ordered data structure** |
|---|---|---|
| 1 | **XCHAIN** | C:\..\XCHAIN\ |
| 2 | FRUITS | C:\..\XCHAIN\FRUITS\ |
| | VEGETABLES | C:\..\XCHAIN\VEGETABLES\ |
| | **MEAT** | C:\..\XCHAIN\MEAT\ |
| | MILK | C:\..\XCHAIN\MILK\ |
| | COSMETICS | C:\..\XCHAIN\COSMETICS\ |
| | ... | |
| | ... | |
| | HELP | |
| | XX | |
| 3 | **VEAL** | C:\..\XCHAIN\MEAT\VEAL.txt |
| | TURKEY | C:\..\XCHAIN\MEAT\TURKEY.txt |
| | BEEF | C:\..\XCHAIN\MEAT\BEEF.txt |
| | PORK | C:\..\XCHAIN\MEAT\PORK.txt |
| | ... | |
| | ... | |
| | HELP | |
| | XX | |

The above data has been stored on the local XCHAIN computer server in the manner that each group of the product ends on some hierarchical level with the particular TXT or JPG file (other data types are also acceptable).

The discussed example serves exclusively for the demonstration purposes and can be adjusted without limitations to the file types; i.e. can be also midi file or similar; as well as without the limitation to the level number through which the user can "propagate".

The data are updated and stored on the local server (further in the text **LS**) of the firm **XCHAIN,** the SMS-gateway **U** has been added to before said local server **LS** in the way that it is possible to send a SMS message via one or more GSM operators to the **LS** server; preferably to the unique number that is easy to remember; and wherein the **LS** stores three information that are connected with the single received SMS message; the GSM telephone number (**N**) from which the message has been sent, the message content (**C**) and the receiving time (**T**).

When the **LS** receives the following set of information (**N,C,T**) it performs the following:
I) retrieves from the memory the time **T**< of the last message sent from the same number **N** that precede this newly received message in some later time **T;**
II) if |**T-T**<|<**δ**, where **δ** is predefined time period, preferably around 1-2 minutes, the **LS** concludes that the user is in "on-line" state and **LS** starts to analyze message content **C.**
   a. in case that the message content **C** contains the word **MEAT,** the **LS** server sends to the GSM number **N** the SMS message with all hierarchically lower sub-options (sub-folders) below MEAT (one level lower):
      (SMS **LS**=>**N**)=(VEAL, TURKEY, BEEF, PORK,...,HELP, XX)
      and the **LS** stores (for the later use) with the number **N** that "level" of the hierarchical data structure on which the user with the GSM number **N** currently is.
      - in case that the user with the number **N** sends new SMS message with the content VEAL (within the time period that is less then **δ**) then **LS** will forward to the number **N** content that has been stored in the file VEAL.TXT
         The example of such message can be:
         (SMS **LS**=>**N**)=(VEAL: STEAK=10 EUR/kg, SHOLDER=7 EUR/kg, KNUCKLE=5 EUR/kg)
         It is clear that VEAL.txt has been changed in time and updated directly on the **LS** by the XCHAIN staff.
      - in case that user with the number **N** sends new SMS message with a typing-error in the content, i.e. VE**B**L (within the time period that is less then **δ**) then **LS** will forward to the number **N** content that warns the user about an error together with the current sub-options (subfolders):
         (SMS **LS**=>**N**)=(CHECK TYPING:VEAL, TURKEY, BEEF, PORK, ...,HELP, XX)
   b. in case that the message content **C** is the word **XX** (or any other agreed keyword), the **LS** will send to the GSM number **N** the SMS message with the content of the hierarchically superior level in respect to the current level. Effectively it means that if the user was previously positioned on: C:\..\XCHAIN\MEAT\VEAL, and if **LS** received keyword **XX** (within the time period that is less then **δ**) the message that will be transmitted back to the GSM number **N** will be:
      (SMS **LS**=>**N**) = (VEAL, TURKEY, BEEF, PORK, ..., HELP, XX)
      and if once more the word **XX** is transmitted to the **LS** (within the time period that is less then **δ**) then the message that will be transmitted back to the GSM number **N** will be:
      (SMS **LS**=>**N**) = (FRUITS, VEGETABLES, MEAT, MILK, ..., HELP, XX)
   c. if the content of the message C is the word **HELP** (or any other predetermined word with the same meaning), received within the time period that is less then **δ,** the **LS** server will send to the GSM number **N** the SMS message with the content of hierarchically "lower" positioned structure.
      Effectively it means that if the user was positioned on C:\..\XCHAIN\MEAT\ and **LS** receive keyword **HELP** within the time period that is less then **δ,** the **LS** server will send to the GSM number **N** the SMS message with the content:
      (SMS **LS**=>**N**)=(VEAL, TURKEY, BEEF, PORK, ..., HELP, XX)
III) if |**T**-**T**<|>**δ,** where **δ** is predefined time period, preferably between 1-2 minutes, the **LS** concludes that the user is in "off-line" state and puts the user on the hierarchically highest level, in our example in can be: C:\..\XCHAIN, and the message sent back to the user has the following form:
   (SMS **LS**=>**N**)=(FRUITS, VEGETABLES, MEAT, MILK,....HELP, XX)

The above simple example serves to understand the basic principles of the system described by the invention, i.e. the way of descending for one level by using the name of the sublevel and ascending for one level (to the top of the structure) by using the previously defined keyword.

It is easily to imagine that some categories presented with the example are "deeper" in the sense of the number of sublevels, i.e. in the case of cosmetic or candies. Moreover, beside the unit price, for some product it might be interested to send back the MMS message with the actual product picture that is also stored with the mentioned hierarchical structure.

Therefore, the described example of the XCHAIN retail store hierarchical structure solves both technical problems mentioned in the very beginning - in the manner that the person skilled in the art may without further assumptions to understand and implement the invention. It should be emphasized (beside the fact that it is obvious) that the data stored on the **LS** are dynamically updated that turns the present system very convenient for use.

There are some important remarks that include the billing mechanism which has to stimulate the using of the above described system. The complicated billing, especially the billing system that includes the SMS billing of the GSM user with the number **N** would certainly discourages the use of the present system. For the efficient use of the system presented with the invention the entire generated bill for the incoming messages to the **LS** server and outgoing messages to the GSM number **N** should be covered by the **XCHAIN,** bearing in mind that it performs direct advertising to the interested customer.

From the technical point of view the realization of the system includes: a **LS** with the hierarchical data structure that is real (i.e. in the form of disk folders) or virtual in the form of database, and that contains the data which can be organized in hierarchical manner and dynamically updated.

The mentioned **LS** has been connected to the SMS gateway **U** as the outer gateway or as the part of the **LS**, wherein the mentioned gateway enables the communication channel GSM-user⇔GSM-operator⇔**U**⇔**LS**.

The mentioned **LS** should also store in the database (as the minimum amount) the time of the last SMS activity from a GSM number **N** to the **LS** as well as the last position in the hierarchical data structure. The incoming messages to the **LS** server enable navigation "to up" and "to down" as well as the retrieving of the requested information.

The described system (inter alia) can be further improved by using a simple algorithms to form the user profiles via tracking the activities of the particular user with the GSM number **N.** So, if the system determines that the particular user always search for the prices within the same group of the products and in the same or similar time, such user can be directly contacted via SMS with an offer for the entrance on the SMS distribution list for the searched kind of products; or it is possible to be awarded by the promotion code that should be used over the counter of the particular store.

Despite the fact that the described system is developed for the retail stores for displaying the prices and direct advertising, it is clear that the use of the above described scheme it is universal. The very same system can be used to display cinemascope repertoire, theater repertoire, to display public services, or any other service that can be arranged in the hierarchical manner.

The good example can be departure/arrival schedules on the railway and bus stations. Another good example can be retrieval of the news/info from the WEB portals via SMS messages without need to visit the portals via Internet.

### Industrial applicability

The industrial applicability of the described system is obvious. The invention uses GSM technology - more particularly SMS technology - for searching and retrieving the hierarchically ordered information stored on the distant server, wherein the mentioned information are updated in time.

## Claims

1. A method of operating a data-processing system for viewing hierarchically ordered server content stored on a local server (**LS**) via SMS/MMS messages comprising steps of:
A. sending a SMS/MMS message from a mobile device with a GSM number (**N**) to a GSM-operator; transmitting information stored in the SMS/MMS message from the GSM-operator to a SMS Gateway (**U**); transmitting information stored in the SMS/MMS message and the GSM user number (**N**) from the SMS Gateway (**U**) to the local server (**LS**);
B. the local server (**LS**) extracts:
• a message having content (**C**):
- being a name of a sub-menu folder in the hierarchically ordered server content stored on the local server (**LS**) that the user intends to retrieve; or
- being a request for accessing an upper menu folder in the hierarchically ordered server content stored on the local server (**LS**); or
- being a help message or a false message;
• a receiving time (**T**) of the message having content (**C**), and
• the GSM number (**N**) of the received message;
C. the local server (**LS**) forms a reply content based on:
- the message having content (**C**) and as applied in step B;
- elapsed time between a last message received from the mobile device with the same GSM number (**N**) and the newly received message having content (**C**) at the receiving time (**T**); and
- a position within the hierarchically ordered server content;
D. the local server (**LS**) records the time (**T**), the GSM number (**N**) and a change in position within the hierarchically ordered server content for the mobile device having the GSM number (**N**); and
E. the local server (**LS**) transmits the reply content formed in step C together with the GSM number (**N**) to the SMS Gateway (**U**) connected to the GSM-operator that transmits the reply message to the mobile device having the GSM number (**N**).

2. A method as defined in claim 1, wherein the elapsed time between the last message received from the same GSM number (**N**) and the newly received message in time (**T**) in step B is calculated; and if said elapsed time is smaller in comparison with a predetermined time value, the GSM user with the GSM number (**N**) will be treated as "on-line" and the local server (**LS**) will:
- proceed to the requested sub-folder and form a reply content that consists of a list of all accessible sub-folders hierarchically below the requested sub-folder, or
- proceed to the requested sub-folder and form a reply content that consists of requested data comprised in said bottom sub-folder, or
- proceed to the requested up-folder and form a reply content that consists of a list of all accessible sub-folders at that hierarchical level, and
if said elapsed time is greater than a predetermined time value, the local server (**LS**) will re-start the navigation across the hierarchically ordered server content from the highest level, and a reply content will contain the list of all first sub-levels in a hierarchy.

3. A method as defined in claim 2, wherein the received message content (**C**) is the false or the help message; the local server (**LS**) will form a reply content that consist of a list of all accessible sub-folders depending on the current position within the hierarchically ordered server content for the GSM user with the GSM number (**N**).

4. A data processing system for viewing hierarchically ordered server content via a GSM mobile device comprising means for carrying out the method of claims 1-3.

## Patentansprüche

1. Ein Verfahren zum Betreiben eines Datenverarbeitungssystems zur Betrachtung hierarchisch angeordneter und auf einem lokalen Server (**LS**) gespeicherten Serverinhalte mittels SMS/MMS Nachrichten umfasst die Schritte:
A. das Versenden einer SMS/MMS Nachricht von einem mobilen Gerät mit einer GSM-Nummer (**N**) zu einem GSM-Anbieter; die in der SMS/MMS Nachricht gespeicherten Informationen werden von dem GSM-Anbieter zu einem SMS-Gateway (**U**) übermittelt; die in der SMS/MMS Nachricht gespeicherten Informationen und die GSM-Nutzernummer (**N**) werden von dem SMS-Gateway (**U**) zu dem lokalen Server (**LS**) übermittelt;
B. der lokale Server (**LS**) extrahiert:
• eine Nachricht mit Inhalt (**C**):
- der ein Name eines Sub-Menü-Folders des hierarchisch angeordneten Serverinhalts ist, der auf dem lokalen Server (**LS**) gespeichert wird und den der Nutzer beabsichtigt abzurufen; oder
- der eine Anfrage ist für den Zugang zu einem höheren Menü-Folder in dem hierarchisch angeordneten Serverinhalt, der auf dem lokalen Server (**LS**) gespeichert wird; oder
- der eine Hilfs- oder eine Fehlermeldung ist;
• eine Empfangszeit (**T**) einer Nachricht mit Inhalt (**C**), und
• die GSM-Nummer (**N**) der empfangenen Nachricht;
C. der lokale Server (**LS**) erstellt einen Antwortinhalt basierend auf:
- der Nachricht mit Inhalt (**C**) und wie angelegt in Schritt B;
- der verstrichenen Zeit zwischen einer zuletzt von dem mobilen Gerät mit der selben GSM-Nummer (**N**) erhaltenen Nachricht und der neuesten erhaltenen Nachricht mit Inhalt (**C**) zum Empfangszeitpunkt (**T**); und
- einer Position innerhalb des hierarchisch angeordneten Serverinhalts;
D. der lokale Server (**LS**) erfasst die Zeit (**T**), die GSM-Nummer (**N**) und einen Wechsel der Position innerhalb des hierarchisch angeordneten Serverinhalts für das mobile Gerät mit der GSM-Nummer (**N**); und
E. der lokale Server (**LS**) übermittelt den in Schritt C erstellten Antwortinhalt zusammen mit der GSM-Nummer (**N**) an das SMS-Gateway (**U**) das verbunden ist mit dem GSM-Anbieter der den Antwortinhalt an das mobile Gerät mit der GSM-Nummer (**N**) übermittelt.

2. Ein Verfahren gemäß der Definition in Anspruch 1, bei dem die verstrichene Zeit zwischen der zuletzt empfangenen Nachricht von der gleichen GSM-Nummer (**N**) und der zeitlich neuesten empfangenen Nachricht (**T**) in Schritt B kalkuliert ist; und wenn besagte verstrichene Zeit geringer ist, im Vergleich zu einem vorbestimmten Zeitwert, dann wird der GSM-Nutzer mit der GSM-Nummer (**N**) als "on-line" gewertet und der lokale Server (**LS**) wird:
- auf den angeforderten Sub-Folder zugreifen und einen Antwortinhalt erstellen bestehend aus einer Liste aller zugänglichen Sub-Folder, die hierarchisch unter dem angeforderten Sub-Folder sind, oder
- auf den angeforderten Sub-Folder zugreifen und einen Antwortinhalt erstellen bestehend aus den angeforderten Daten, die in besagtem untersten Sub-Folder beinhaltet sind, oder
- auf den angeforderten Sub-Folder zugreifen und einen Antwortinhalt erstellen bestehend aus einer Liste aller zugänglichen Sub-Folder auf der hierarchischen Ebene, und
wenn besagte verstrichene Zeit größer ist als der vorbestimmte Zeitwert, dann wird der lokale Server (**LS**) die Navigation durch den hierarchisch angeordneten Serverinhalt von der höchsten Ebene erneut beginnen und der Antwortinhalt wird eine Liste aller ersten Sub-Ebenen in der Hierarchie enthalten.

3. Ein Verfahren gemäß der Definition in Anspruch 2, bei dem der empfangene Nachrichteninhalt (**C**) eine Fehler- oder eine Hilfsmeldung ist; der lokale Server (**LS**) wird einen Antwortinhalt erstellen bestehend aus einer Liste aller zugänglichen Sub-Folder, abhängig von der gegenwärtigen Position innerhalb des hierarchisch angeordneten Serverinhalts für den GSM-Nutzer mit der GSM-Nummer (**N**).

4. Ein Datenverarbeitungssystem zur Betrachtung hierarchisch angeordneter Serverinhalte mittels eines GSM mobilen Geräts, das die Arten zur Ausführung der Verfahren der Ansprüche 1-3 umfasst.

## Revendications

1. La méthode d'opération d'un système de traitement de données pour la visualisation du contenu du serveur, ordonné hiérarchiquement et stocké sur un serveur local (**LS**), via des messages SMS/MMS, comprend les démarches suivantes:
A. envoyer un message SMS/MMS à un opérateur GSM depuis un appareil mobile avec un numéro GSM (**N**); transmettre les informations stockées dans le message SMS/MMS depuis l'opérateur GSM jusqu'à un SMS Gateway (**U**); transmettre les informations stockées dans le message SMS/MMS et le numéro GSM de l'utilisateur (**N**) depuis le SMS Gateway (**U**) jusqu'au serveur local (**LS**);
B. le serveur local (**LS**) extrait:
• le message contenant (**C**):
- le nom d'un dossier du sous-menu inclus dans le contenu du serveur ordonné hiérarchiquement et stocké sur le serveur local (**LS**) que l'utilisateur a l'intention d'extraire; ou
- une demande pour accéder à un dossier du menu supérieur inclus dans le contenu du serveur ordonné hiérarchiquement et stocké sur le serveur local (**LS**); ou
- un message d'aide ou un faux message;
• le temps de réception (**T**) du message au contenu précité (**C**), et
• le numéro GSM (**N**) du message reçu;
C. le serveur local (**LS**) forme le contenu d'une réponse à base:
- du message au contenu précité (**C**) tel qu'appliqué dans la démarche B;
- du temps écoulé entre le dernier message reçu depuis l'appareil mobile au même numéro GSM (**N**) et le message nouvellement reçu au contenu précité (**C**) au moment même de sa réception (**T**); et
- de la position dans le contenu du serveur ordonné hiérarchiquement;
D. le serveur local (**LS**) enregistre le temps (**T**), le numéro GSM (**N**) et le changement de position dans le contenu du serveur ordonné hiérarchiquement pour l'appareil mobile au numéro GSM (**N**); et
E. le serveur local (**LS**) transmet le contenu de la réponse formée dans la démarche C avec le numéro GSM (**N**) au SMS Gateway (**U**) connecté à l'opérateur GSM qui transmet le message de réponse à l'appareil mobile au numéro GSM (**N**).

2. La méthode, telle que définie dans la revendication 1, permet de calculer le temps écoulé entre le dernier message reçu depuis le même numéro GSM (**N**) et le message nouveau reçu au moment (**T**) dans la démarche B; et si le temps écoulé est plus court que la valeur de temps prédéterminée, l'utilisateur GSM au numéro GSM (**N**) sera considéré comme étant « en ligne » et le serveur local (**LS**) va:
- passer au sous-dossier demandé et créer une réponse qui comprendra la liste de tous les sous-dossiers accessibles ordonnés hiérarchiquement sous le sous-dossier demandé, ou
- passer au sous-dossier demandé et créer une réponse qui comprendra des données demandées incluses dans le sous-dossier inférieur déjà mentionné, ou
- passer au dossier supérieur demandé et créer une réponse qui comprendra la liste de tous les sous-dossiers accessibles à ce niveau hiérarchique, et,
si le temps écoulé est plus long que la valeur de temps prédéterminée, le serveur local (**LS**) va recommencer la navigation à travers le contenu du serveur hiérarchiquement ordonné à partir du plus haut niveau, et la réponse va contenir la liste de tous les premiers sous-niveaux dans l'ordre hiérarchique.

3. Dans la méthode, telle que définie dans la revendication 2, dans laquelle le contenu du message reçu (**C**) est un message faux ou un message d'aide; le serveur local (**LS**) va créer une réponse qui comprendra la liste de tous les sous-dossiers accessibles suivant leur position actuelle dans le contenu du serveur ordonné hiérarchiquement pour l'utilisateur GSM au numéro GSM (**N**).

4. Un système de traitement de données pour la visualisation du contenu du serveur ordonné hiérarchiquement via un appareil mobile GSM qui dispose des moyens pour réaliser la méthode décrite dans les revendications 1-3.
